(19) Europäisches Patentamt / European Patent Office / Office européen des brevets

(11) **EP 3 015 866 A1**

(12) **EUROPEAN PATENT APPLICATION**

(43) Date of publication:
04.05.2016 Bulletin 2016/18

(51) Int Cl.:
*G01P 3/44* (2006.01)  *G01P 3/48* (2006.01)
*G01S 15/58* (2006.01)

(21) Application number: 14460078.0

(22) Date of filing: 30.10.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: ABB Technology AG
8050 Zürich (CH)

(72) Inventors:
• **Rzeszucinski, Pawel**
  **47-200 Kedzierzyn-Kozle (PL)**
• **Lewandowski, Daniel**
  **30-384 Krakow (PL)**

(74) Representative: **Chochorowska-Winiarska, Krystyna**
ABB Sp. z o. o.
ul. Zeganska 1
04-713 Warszawa (PL)

(54) **A method of automatic determination of rotational speed of a shaft in a rotating machine**

(57)    The subject of the invention is a method of automatic determination of rotational speed of a shaft in a rotating machine and a mobile device for performing the method. The method comprises the following steps: placing a mobile device (5) in the closest proximity of the shaft (3) of the monitored rotating machine, obtaining the nameplate shaft rotational speed or estimating the most probable shaft rotational speed $f_R$, fixing the length of a measurement period T, fixing the value of the sampling frequency $f_S$, fixing the distance D between the mobile device and the shaft of the monitored rotating machine, generating a tone of known frequency with the use of a sound generating hardware unit embedded in the mobile device, recording acoustic signals x with the use of a sound recording hardware unit embedded in the mobile device at the sampling frequency $f_S$ for the measurement period T, storing the recorded acoustic signals samples x(n) in the memory unit of the mobile device in a fixed file format. The method is characterized by further comprising the step of filtering the acoustic signal samples x(n) around the tone of known frequency generated by the sound generating hardware unit for receiving filtered acoustic signal samples $x_F(n)$, creating absolute analytic version of the filtered acoustic signal samples $x_A(n)$, calculating a vector of correlation coefficient values c(k) derived between signal $x_A(n)$ and signals taken from matrix M, containing a number of artificially generated tone signals of known frequencies, and determining the exact shaft rotational speed $f_{ER}$ based on the maximal value of the vector of correlation coefficient values c(k).

Fig. 1

**Description**

**FIELD OF THE INVENTION**

The subject of the invention is a method of automatic determination of a rotational speed of a shaft in a rotating machine and a mobile device for performing the method. The machine of which the shaft rotational speed is to be determined is one that comprises a rotating shaft, such as a gearbox, or a similar device comprising a rotating shaft.

**BACKGROUND OF THE INVENTION**

The invention relates to performing condition monitoring tasks of machinery comprising rotating parts. One of the fundamental parameters that needs to be fed into a rotating machinery condition monitoring system is the rotational speed of the shafts operating in the machine. This parameter is essential in order to derive other characteristic frequencies of the system that may contain some valuable diagnostic information. In a typical arrangement the process of assessing the condition of a rotating machine may be performed for example in the following way. The vibration generated by the rotating machine is recorded by means of dedicated sensors, for example accelerometers, which are coupled to the vibrating surface by means of, for example, studs or adhesive materials. The optimal location of the sensors has been widely described in the literature and specific recommendations can be found in, for example, ISO standard 10816-3:2009. The measured quantities are sampled and transferred via a data acquisition unit to the device capable of storing the sampled data, for example the memory of the data acquisition unit. The data is then processed by means of dedicated software capable of transforming the sampled data into, for example, frequency domain which allows diagnosis to be made based on dedicated algorithms implemented in the processing unit, or by means of visual inspection. In majority of occasions the rotation of the shaft is the main source of power to the system, and so almost all characteristic frequencies that can be observed in the spectrum are somehow related to the shaft rotational speed. Most often the shaft rotational speed in the rotating machinery is determined by means of a dedicated hardware e.g. tachometers, encoders or laser light readings installed in the close proximity to the rotating shaft. Information provided by these tools give an easy to interpret and utilize indication of the rotational speed of the shaft. The disadvantage of such an approach is that additional instrumentation is required which adds to the complexity of measurements set-up and increases the cost of performing such a measurements. Also the installation of such devices needs to be very precise and so it is quite common that the limited accessibility to the typically covered shafts may make the appropriate installation of these devices virtually impossible.

From the European patent EP 1285274 there is a known method of determining the rotational speed of a motor. The main idea of this solution is based on measuring the mechanical vibration of the motor with a suitable measuring sensor. Measurement data is collected from the vibration at a suitable frequency for a predetermined measurement period. The measured data is stored in the memory of the processor. The speed of rotation of the motor is determined from the measurement data by deriving the cycle length of a periodic vibration signal in the time domain (not in the frequency domain) by using a maximum likelihood estimate (MLE) calculated by maximizing a maximum likelihood function (MLF) of the measurement data. When the maximum likelihood function (MFL) obtains its highest value it means that the rotational speed of the motor is determined. This method does not take advantage of the information contained in the harmonic components of the frequency that corresponds to the motor rotational speed and, in some occasions, these can be the only sources of information, form which the shaft rotational speed can be obtained (when the fundamental frequency corresponding to the shaft rotational speed is not clearly present in the signal).

From Polish patent PL.211282 there is a known method and system for determining the rotational speed of crankshaft in combustion engine. The method consist of measuring vibrations generated by the crankshaft with the use of a single axle accelerometer, transforming the measured data into a discrete form, low pass filtering and amplifying the data. Such a signal is then sampled and digitalized. The digital signals are transformed into frequency domain and after filtration with the use of a time window, the data are subject to analysis. The frequency of the spectral lines having the maximum value of the amplitude in the analyzed spectrum is said to be corresponding to the rotational speed of the crankshaft. The invention might find utilization in situations when the shaft rotational speed is clearly the most dominant component within the system. This may not be the case in majority of real applications where more than one machine are operating together comprising a more complex system. In such a situation apart from the frequencies to be detected a number of components originating from other rotating parts within the system are present and might be stronger than the expected component.

**STATEMENT OF THE PROBLEM**

In the field of rotating machinery condition monitoring majority of the most commonly used diagnostic methods require information about the shaft rotational speed of the monitored system in order to perform reliable assessment of the condition of the monitored component. Typically such information is obtained by means of a dedicated hardware e.g. encoders or tachometers, however these may not always be installed at the monitored system. In such a situation stopping the machine in order to install a dedicated hardware may not always be feasible or economically viable. The present invention overcomes this problem by using a routine which is based on the capabilities of modern mobile devices to simultaneously generate an acoustic signal of a known frequency and measure the audible sounds arriving at the mobile device. The method contained in the invention is capable of interpreting the recorded signals to provide a robust shaft rotational speed determination based on techniques known in the state of the art. The invention does not require any additional instrumentation in order to provide a robust shaft rotational speed determination.

## SUMMARY OF THE INVENTION

The present invention provides a method of automatic determination of rotational speed of a shaft in a rotating machine according to claim 1 and a mobile device for implementing the method according to claim 4. The mobile device, which maybe be, but is not limited to, a mobile phone, a tablet, a laptop, a PDA or any other mobile device is equipped with a computer data processor unit and an audio unit which comprises a sound generating hardware unit, and a sound recording hardware unit. The present invention provides also a computer program for automatic determination of rotational speed of a shaft in a rotating machine according to claim 11 which computer program is loadable and executable on a data processing unit of a mobile device and which computer program performs when being executed by the data processing unit of the mobile device, the method according to claims 1-5.

The fundamental idea of the invention is that the rotational speed of the component, for example a shaft, is determined based on signals generated by a suitable hardware unit, for example a loudspeaker, and signals simultaneously recorded by a suitable hardware unit, for example a microphone. The shaft rotational speed of the monitored rotating machinery is determined in an automatic way from the measured acoustic signal, recorded by a suitable hardware unit, for example a microphone, on the basis of information contained in the specific frequency band of the measured acoustic signal.

The measured acoustic signal is subject to processing as per the following steps: filtering the measured acoustic signal in the specific frequency band, calculating an absolute value of an analytic version of the filtered acoustic signal, generating a number of correlation coefficient values derived between the absolute value of the analytic version of the filtered acoustic signal and artificially generated tones of different, specifically selected frequencies, selecting the frequency which results in the highest correlation coefficient between the absolute value of an analytic version of the filtered acoustic signal and artificially generated tones of different, specifically selected frequencies. Eventually the frequency of an artificially generated signal which corresponds to the highest correlation coefficient value determines the exact shaft rotational speed of the monitored rotating machinery. The greatest advantages of the present invention include the ease of performing the measurements since virtually all of the modern mobile devices have the required capabilities making the present invention applicable, intuitive result being a single number representing the shaft rotational speed, low time required to set-up and perform the measurements or no need for the mobile device to be in direct contact with the monitored machine.

## DESCRIPTION OF THE DRAWINGS

For a more comprehensive description of the invention, it will be outlined with conjunction with the accompanying drawings, in which:

Fig. 1 presents a schematic view on the system comprising the measurement set-up of the described disclosure for the automatic determination of a rotational speed of a shaft in a rotating machine,
Fig.2 shows a schematic view of a mobile device used for the automatic determination of a rotational speed of a shaft in a rotating machine,
Fig.3 shows a general overview of the method of the present invention,
Fig.4 illustrates acoustic signal samples $x[n]$ recorded from the monitored rotating machinery with the use of the sound recording unit of the mobile device,
Fig. 5 illustrates filtered acoustic signal samples $x_F[n]$ which are the result of filtering acoustic signal samples $x[n]$,
Fig. 6 illustrates absolute analytic acoustic signal samples $x_A[n]$ being an absolute value of the analytic version of the filtered acoustic signal samples $x_F[n]$,
Fig.7 illustrates the vector of correlation coefficients derived between the filtered acoustic signal and artificially generated tones of different, specifically selected frequencies.

**DETAILED DESCRIPTION OF THE INVENTION**

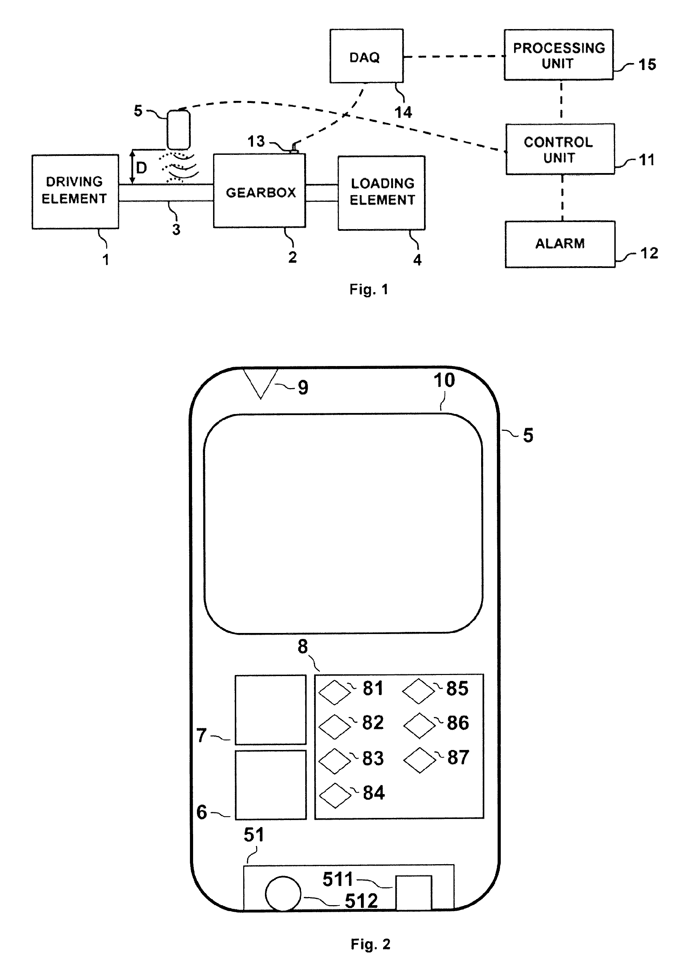

The exemplary embodiment comprises a system where a driving element 1, for example an electric motor, is driving a rotating machine 2, for example a gearbox, which are connected by a shaft 3. For the sake of completeness the gearbox 2 is driving a loading element 4, for example a generator. The mobile device 5, which maybe be, but is not limited to, a mobile phone, a tablet, a laptop, a PDA or any other mobile device is equipped with an audio unit 51 which comprises a sound generating hardware unit 511, for example a loudspeaker, and a sound recording hardware unit 512, for example a microphone. The presence of the mobile phone 5 in the system serves at least two purposes. The first purpose is generation of a tone of a known frequency $f_T$. The tone of the known frequency $f_T$ is generated by the sound generating hardware unit 511 embedded in the mobile phone 5. Majority of the energy of the tone of the known frequency $f_T$ propagates freely in the surroundings of the rotating shaft 3 of the monitored rotating machinery, however some portion of the energy of the tone of the known frequency $f_T$ generated by the sound generation hardware unit 511 in the mobile phone 5 gets reflected of the surface of the rotating shaft 3 and propagates back towards the mobile phone 5. The reflected portion of the energy of the tone of the known frequency $f_T$ is marked in dotted lines in fig.1. The second purpose for the presence of the mobile phone 5 in the system is to record the reflected sound arriving at the mobile phone 5 by means of the sound recording hardware unit 512. In the preferred embodiment of the invention the recording of the reflected sound, arriving at the sound recording hardware unit 512 is performed simultaneously with the generation of a tone of the known frequency $f_T$ generated by the sound generation hardware unit 511. The mobile phone 5, schematically shown in fig. 2 is instrumented with an embedded data acquisition unit 6 capable of performing the standard signal preprocessing operations, for example signal amplification or low-pass anti-aliasing filters, which are well known for a person skilled in the art. The data acquired with the data acquisition unit 6 is stored in an embedded memory unit 7 of the mobile phone 5. The mobile phone 5 is also instrumented with an embedded data processing unit 8 capable of performing signal processing tasks on the data from the data acquisition unit 6.

The processing unit comprises some modules 81- 87 adapted for realizing the present invention. A matrix generating module 81 is adapted to generate matrix M, which contains a number of artificially generated tone signals of specific frequencies. This is explained in detail in other part of the description. A data filtering module 82 is adapted to filter data received from the measurement. An analytic signal creation module 83 is adapted for performing analytic signal creation on the filtered acoustic signal samples, received from the measurement. The absolute value calculation module 84 for calculating a signal being an absolute value of the analytic signal of the filtered acoustic signal. A correlation coefficient calculation module 85 for determining a vector of correlation coefficient values between the absolute analytic acoustic signal and signals contained in matrix M. A maximal value deriving module 86 for determination of an index of the maximal value contained in the vector of the correlation coefficient values. A speed extraction module 87 to extract the exact shaft rotational speed $f_{ER}$. The mobile device is also equipped with a standard input/output unit 9 and with a standard display unit 10. The mobile phone 5 may be connected with the external control unit 11. The external control unit 11 is interfaced with an external alarming device 12. The connection of the mobile phone 5 with the external control unit 11 may be performed by means of a wired solution which might be, but is not limited to, for example, a USB cable. The connection of the mobile phone 5 with the external control unit 11 may also be performed by means of a wireless solution which might be, but is not limited to, for example one of the data communication protocols, for example Wi-Fi or Bluetooth.

In addition to the system presented in the invention the gearbox may be equipped with a vibration sensor 13, in the example represented by an accelerometer mounted on the casing of the gearbox 2. Often in order for meaningful information to be derived from the vibration measured by a suitable vibration sensor 13, information about the rotational speed of a shaft, determination of which is the subject of the present invention, is required. The vibration sensor 13 is connected to an external data acquisition unit (DAQ) 14 capable of performing the standard signal preprocessing operations well known for a person skilled in the art, for example signal amplification or low-pass anti-aliasing filters. The external data acquisition unit 14 is connected with an external processing unit 15, which in turn is connected with an external control unit 11. The last element of the system may be an external alarming device 12 to which the external control unit 11 is connected. The vibration sensor 13, the external data acquisition unit 14 , the external processing unit 15, the external control unit 11 and the external alarming device 12 constitute an external system for measuring and processing vibration of the rotating machine for condition monitoring purposes. The connections between the vibration sensor 13, the external data acquisition unit 14 , the external processing unit 15 and the external control unit 11 are indicated in dashed lines in fig.1.

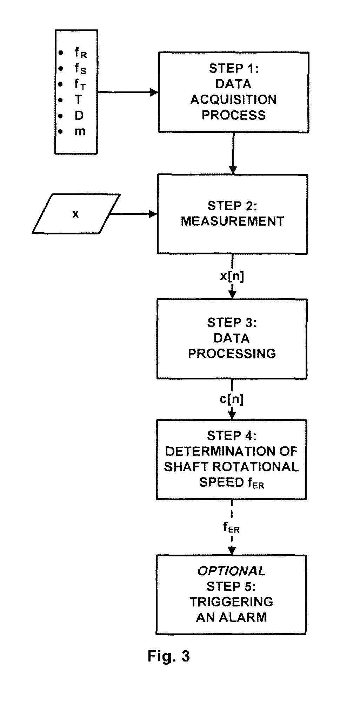

The method of the present invention, shown in fig. 3, is realized in the following steps.

**Step 1. Data acquisition process**

In the first step the user specifies and provides certain parameters which are required in order for the subsequent, automated part of the invention to be operational. These parameters are the following:

- an expected rotational speed of the shaft $f_R$,
- a length of the measurement time period T,
- a sampling frequency $f_S$,
- a frequency of the tone $f_T$ generated by the sound generating hardware unit of the mobile phone,
- a distance D between the mobile phone and the rotating shaft,
- a number of artificially generated signals m to be generated in matrix M, which is created in matrix generation module.

The nameplate information of the driving element 1 might be used to provide the expected rotational speed of the shaft $f_R$ at the input of the gearbox. If no such information is available, in order to perform the data acquisition process correctly, a guessed assessment of the most probable shaft rotational speed should be made. The described exemplar embodiment assumes that the expected rotational speed of the shaft $f_R$ of the driving element 1 is equal to 1500 rotations per minute, which corresponds to 25, rotations per second, hence $f_R$ is equal to 25Hz.

The preferred length of the measurement time period T is at least 100 times the expected shaft rotational speed $f_R$. The bigger the length of the measurement time period T, the better the resolution of the signal in the frequency domain, and the more accurate the results of the automatic determination of the rotational speed of a shaft in the monitored rotating machinery. When, according to the exemplar embodiment, the expected shaft rotational speed $f_R$ is equal to 25Hz, which corresponds to 0.04s per shaft revolution, the measurement time period T should be at least 4 seconds.

The sampling frequency $f_S$ informs about the rate at which the acoustic signal recorded by the sound recording hardware unit 512 of the mobile phone 5 are sampled by the embedded data acquisition unit 6 during the recording process. In order to comply with the theory of the analog to digital conversion the sampling frequency $f_s$ should not be lower than twice the highest frequency expected to appear in the recorded signal. In the exemplar embodiment of the invention the sampling frequency $f_s$ is set to 44.1 kHz.

The product of the measurement time period T and the sampling frequency $f_s$ uniquely determines the number of samples N recorded during the data acquisition process.

According to the invention the appropriate frequency of the tone generated by the sound generating hardware unit 511 of the mobile phone 5 $f_T$ should not be lower than twice the expected shaft rotational speed $f_R$. In the exemplar embodiment the frequency of the tone generated by the sound generating hardware unit 511 $f_T$ is set to 5kHz.

In the preferred embodiment the mobile phone 5 should be in the closest possible distance D to the rotating shaft 3 of the monitored rotating machinery. The bigger the distance between the mobile phone 5 and the rotating shaft 3 the more energy of the tone of frequency $f_T$ gets attenuated in the air. As a result less energy arrives at the sound recording hardware unit 512 of the mobile phone 5. In the exemplar embodiment the distance D between the mobile phone 5 and the rotating shaft 3 is set to 10cm. The maximal allowable distance may be influenced by many factors which might include, but are not limited to, the frequency of the tone $f_T$, the amount of ambient noise during the measurement process, weather conditions etc.

Matrix M contains m number of artificially generated tone signals $x_{Mk}[n],..., x_{Mm}[n]$, where n is an integer between 1 and N, k is an integer between 1 and m. Each signal in matrix M is of different, yet known frequency $f_{Mk},...,f_{Mm}$. The frequencies $f_{Mk},...,f_{Mm}$ of tone signals $x_{Mk}[n],..., x_{Mm}[n]$ contained in matrix M are chosen so that the frequency corresponding to the expected shaft rotational speed $f_R$ lies in the center of the set of values determined by the frequencies $f_{Mk},...,f_{Mm}$. The number of signals contained in matrix M determines its size and, at the same time, the accuracy of the determination of the exact shaft rotational speed $f_{ER}$, which is the subject of the present invention. In the exemplar embodiment matrix M contains 100 signals $x_{M1}[n]$ - $x_{M100}[n]$ of frequencies $f_{M1}$ - $f_{M100}$, and so m is equal to 100. Each signal in the matrix M is a tone of different frequency $f_{Mk}...f_{Mm}$, arranged in an ascending order, with the frequency difference between each signal in the matrix M of 0.5Hz, so that the frequency of signal $x_{M1}[n]$ is equal to 0.5Hz, $x_{M2}[n]$ is equal to 1 Hz, $x_{M3}[n]$ is equal to 1.5Hz and so on until $x_{M99}[n]$ is equal to 49.5Hz and $x_{M100}[n]$ is equal to 50Hz.

**Step 2. Measurement.**

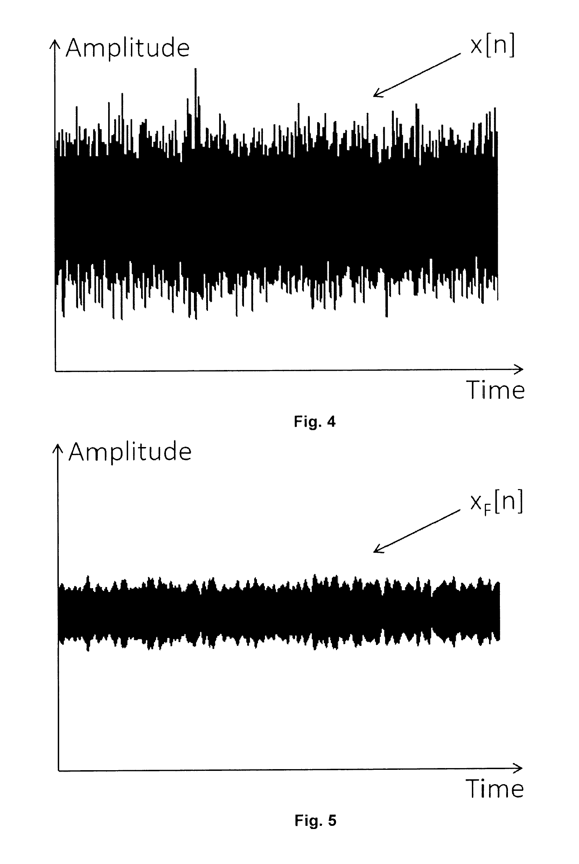

In this step the process of recording the acoustic signal x by the sound recording hardware unit 512 of the mobile phone 5 is initiated, the acoustic signal x acquired within the embedded data acquisition unit 6 for the measurement time period T are subject to preprocessing by means of, for example, signal amplification or low-pass anti-aliasing filtration, after which samples of the acoustic signal x are subject to analog to digital conversion at the sampling frequency $f_s$. Eventually the acoustic signal samples x[n] sampled at the frequency $f_s$ for the measurement time period T are stored in the embedded memory unit 7 of the mobile phone 5. Fig. 4 shows the time domain plot of the acoustic signal samples x[n] used in this exemplary embodiment of the present invention.

**Step 3. Data processing.**

After the data acquisition process is finished and the data are stored in the embedded memory unit 7 of the mobile phone 5, the measurement data are send to the embedded processing unit 8 which performs the automatic determination of the rotational speed of the shaft 3 in a rotating machine as follows:

- band pass filtering the acoustic signal samples x[n] in data filtering module 82 around the frequency $f_T$ of the tone generated by the sound generating hardware unit 511 of the mobile phone 5,
- performing the analytic signal creation of the filtered acoustic signal samples $x_F$[n] in analytic signal creation module 83,
- calculating a signal $x_A$(n), being an absolute value of the analytic version of the filtered acoustic signal samples $x_F$[n] in absolute value calculation module 84,
- determining a vector of correlation coefficient values between the signal $x_A$[n] and signals contained in matrix M in correlation coefficient calculation module 85.

For a person skilled in the art band pass filtering the acoustic signal samples x[n] around the known frequency $f_T$ of the tone generated by the sound generating hardware unit 511 will not be difficult. Many different filter designs may be used for the task. These may include, but are not limited to, for example Butterworth filters or Chebyshev filters. In the exemplar embodiment of the present invention the Butterworth filter is used. The width of the filtering band may be different depending on many factors which might include, but are not limited to, the frequency $f_T$ of the tone generated by the sound generating hardware unit 511 of the mobile phone 5, the exact shaft rotational speed $f_{ER}$, the amount of noise in the surroundings of the rotating shaft 3 etc. For the sake of a simplified description of the present invention the width of the filtering band is set to twice the assessed shaft rotational speed $f_R$. The output of band pass filtering the acoustic signal samples x[n] around the frequency $f_T$ of the tone generated by the sound generating hardware unit 511 of the mobile phone 5, with a band pass filter are the filtered acoustic signal samples $x_F$[n]. The time domain plot of the filtered acoustic signal samples $x_F$[n] is shown in fig. 5.

The process of obtaining the absolute analytic acoustic signal samples $x_A$[n] is conducted by means of deriving the absolute value of the analytic version of the filtered acoustic signal samples $x_F$[n]. The analytic signal is derived from the filtered acoustic signal samples $x_F$[n] according to the formula:

$$x_a[n] = x_F[n] + j\widehat{x_F}[n] \tag{1}$$

where:

$x_a$[n] are samples of the analytic version of the filtered acoustic signal samples $x_F$[n],

j is the imaginary unit,

$\widehat{x_F}[n]$ is the Hilbert transform of the acoustic signal samples $x_F$[n] and is derived as per formula:

$$\widehat{x_F}[n] = \frac{1}{\pi} x_F[n] * \frac{1}{N} \tag{2}$$

where:

    * represents the convolution operator.

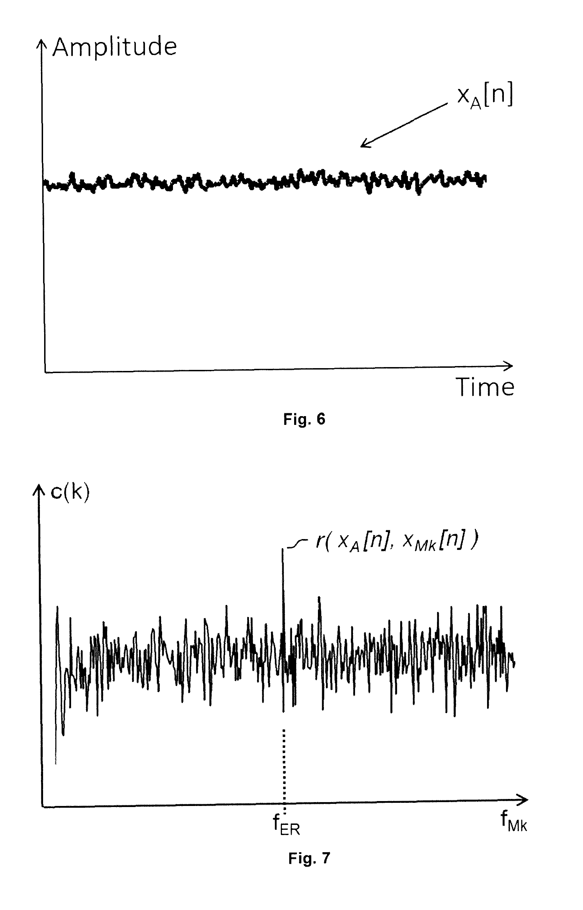

Next the absolute analytic acoustic signal samples $x_A$[n], shown in fig. 6, are derived as the absolute value of the analytic signal $x_a$[n] as per formula:

$$x_A[n] = \sqrt{Re(x_a[n])^2 + Im(x_a[n])^2} \qquad (3)$$

where:

Re represents the real part of the analytic signal $x_a[n]$,
*Im* represents the imaginary part of the analytic signal $x_a[n]$.

Taking into account the absolute analytic acoustic signal samples $x_A[n]$ and the signals contained in matrix M, $x_{Mk}[n],..., x_{Mm}[n]$ of frequencies $f_{Mk}...f_{Mm}$, a process of determination of a vector of correlation coefficient values c[k] is performed. The vector of correlation coefficient values c[k] derived between the signal $x_A[n]$ and each of the signals contained in matrix M, $x_{Mk}[n],..., x_{Mm}[n]$ of frequencies $f_{Mk}...f_{Mm}$ is formulated. The higher the correlation coefficient value between the signal $x_A[n]$ and a given signal contained in matrix M, the more accurate the determination of the frequency corresponding to the exact shaft rotational speed $f_{ER}$, which is the subject of the proposed invention. In the exemplar embodiment the correlation coefficient between two signals, for example a[n] and b[n], is obtained as per the following formula:

$$r(a,b) = \frac{(N \cdot \sum_{i=1}^{n} a[n] \cdot b[n]) - (\sum_{i=1}^{n} a[n] \cdot \sum_{i=1}^{n} b[n])}{\sqrt{N \cdot \sum_{i=1}^{n} a[n]^2 - \sum_{i=1}^{n} a[n]^2} \cdot \sqrt{N \cdot \sum_{i=1}^{n} b[n]^2 - \sum_{i=1}^{n} b[n]^2}} \qquad (4)$$

where:

r is the correlation coefficient between signal a[n] and b[n],
n is the current sample number of the signal,
*N* is the number of samples in the signal.

Consequently the vector of correlation coefficient values c[k] calculated between the signal $x_A[n]$ and each of the signals contained in matrix M, $x_{Mk}[n],..., X_{Mm}[n]$ of frequencies $f_{Mk}...f_{Mm}$ may be derived as per the following formula:

$$c[k] = r(x_A[n], x_{Mk}[n]) \qquad (5)$$

**Step 4. Determination of the shaft rotational speed $f_{ER}$.**

In this step a determination of an index of the maximal value contained in the vector of correlation coefficient values c[k] calculated between the signal $x_A[n]$ and each of the signals contained in matrix M, $x_{Mk}[n],..., x_{Mm}[n]$ of frequencies $f_{Mk}...f_{Mm}$ is performed. The task is executes in the maximal value deriving module 86. The index of the maximal value within the vector of correlation coefficient values c[k] is the index of the specific signal contained in matrix M which is of frequency that corresponds to the exact shaft rotational speed $f_{ER}$ of the monitored rotating machinery. The exact shaft rotational speed $f_{ER}$ is obtained in the speed extraction module 87. The speed $f_{ER}$ of the monitored rotating machinery may be presented on the standard display unit 10 and/or may be sent through standard input/output unit 9 the to the external control unit 11 for further processing.
In the exemplar embodiment it is assumed that the speed of the rotation of shaft 3 is equal to 1500 rotations per minute, which corresponds to 25 rotations per second, so $f_R$ is equal 25Hz and so the signal $x_{M50}[n]$ contained in matrix M of frequency $f_{M50}$ equal to 25Hz returns the highest value within the vector of correlation coefficient values c[k] calculated between the signal $x_A[n]$ and each of the signals contained in matrix M, $x_{Mk}[n],..., x_{Mm}[n]$ of frequencies $f_{Mk}...f_{Mm}$. Consequently the frequency $f_{M50}$ of signal $x_{M50}[n]$ equal to 25Hz is selected as the most accurate determination of the exact shaft rotational speed $f_{ER}$, which is the subject of the present invention.

**Step 5. Optional. Triggering an alarm.**

Alternatively when the gearbox is equipped with a vibration sensor 13, then the external vibration measurement and processing system may be used in conjunction with the information on the exact shaft rotational speed $f_{ER}$ for the assessment of the condition of the monitored rotating machine. In such a case a vibration sensor 13 is connected with external data acquisition unit 14, which in turn is connected with an external data processing unit 15. In the unit 15 after preprocessing and processing vibration data, the data are transmitted to the control unit 11 for including such data for controlling and monitoring the condition of the rotating machine under investigation. According to the result of the analysis, the external control unit 11 may, for example, trigger an alarm device 12 informing about changes in the condition of the monitored rotating machinery when any of the condition indicators cross pre-defined threshold values.

It is to be understood that the exemplar embodiment presented above is shown to help appreciate the concept behind the present invention and illustrate the possible rather than the only solution. For this reason it should be emphasized that the invention is not restricted to the presented embodiment outlined above or disclosed in the claims. A person skilled in the art will appreciate the fact that many variations and modifications can be made to the invention within the inventive idea disclosed in the accompanying claims.

**Claims**

1.  A method of automatic determination of rotational speed of a shaft (3) in a rotating machine **characterized in that** the method comprises the steps of:

    - delivering by user specific input parameters determining the operating conditions of the present invention,
    - generating matrix M containing m number of artificially generated tone signals $x_{Mk}[n]$,..., $x_{Mm}[n]$, where n is an integer between 1 and N, N is the number of samples recorded during the data acquisition process, k is an integer between 1 and m, which data are stored in a memory unit (7) of the mobile device (5),
    - generating a tone of frequency $f_T$ by an audio unit (51) of the mobile device (5) placed in the proximity of the rotating shaft (3) during the operation of the shaft,
    - measuring reflected acoustic signal x from a rotating shaft (3) by an audio unit (51) of the mobile device (5) during the operation of the shaft,
    - processing reflected acoustic signal x from a rotating shaft (3) for receiving a vector of correlation coefficient values c(k) which are used for determination of an exact shaft rotational speed $f_{ER}$, where the vector of correlation coefficient values c(k) contains the values of correlation coefficient calculated from the measured reflected acoustic signal and tone signals contained in matrix M, and the exact shaft rotational speed $f_{ER}$ is obtained as a frequency of such a tone signal from matrix M that corresponds to the highest correlation coefficient value from vector c(k).

2.  A method according to claim 1, **characterized in that** the step of the processing of the reflected acoustic signal x from a rotating shaft (3) comprises the following steps:

    - sampling the measured signal x in a data acquisition unit (6) of the mobile device (5) for receiving measured acoustic signals samples x[n],
    - filtering the measured acoustic signal samples x[n] in the processing unit (8) in the specific tone frequency band for receiving a filtered acoustic signal samples $x_F[n]$,
    - deriving absolute value of the analytic version of the filtered acoustic signal samples $x_F[n]$ for receiving an absolute analytic acoustic signal $x_A[n]$,
    - determining in the data processing unit (8) a vector of correlation coefficient values c(k) calculated between the absolute analytic acoustic signal $x_A[n]$ and the artificially generated tone signals contained in matrix M,
    - determining an exact shaft rotational speed $f_{ER}$ by obtaining the value of the frequency of such a tone signal from matrix M that corresponds to the highest correlation coefficient value from vector c(k), which frequency corresponds to the shaft rotational speed $f_{ER}$ of the monitored rotating machinery.

3.  A method according to claims 1-2, **characterized in that** it further comprises the step of presenting the value of the exact shaft rotating speed $f_{ER}$ on a display unit (10) of the mobile device (5) and/or transferring the data containing the value of the exact shaft rotating speed $f_{ER}$ to the external control unit (11) for further processing.

4.  A method according to claim 3, **characterized in that** when the exact shaft rotational speed $f_{ER}$ is greater than the threshold value, the control unit (11) triggers an alarm in the alarm unit (12) of the external system.

5. A method according to claim 1, **characterized in that** the exact shaft rotational speed $f_{ER}$ is transmitted to the control unit (11) of the external system for completing the data used to assess the condition of the monitored rotating machine, when a vibration of the rotating machine is measured.

6. A mobile device comprising:

   - an audio unit (51) with means for simultaneously generating and recording acoustic signals,
   - a memory unit (7) for storing input parameters delivered to the data acquisition unit (6) by the user and the values of the artificially generated tone signals contained in a matrix M,
   - a data processing unit (8) for processing the reflected acoustic signal from the rotating shaft (3) for determining a vector of correlation coefficient values c(k) and for choosing the frequency of such a tone signal from matrix M that corresponds to the highest correlation coefficient value from vector c(k), which frequency corresponds to the shaft rotational speed $f_{ER}$ of the monitored rotating machine,
   - a display unit (10) for displaying the value of the exact shaft rotational speed $f_{ER}$.

7. A mobile device according to claim 6, characterize in that it further comprises an input/output unit (9) for connecting with an external control unit (11) of the external system for triggering an alarm when a threshold given by the user is exceeded.

8. A mobile device according to claims 6-7, **characterized in that** the data processing unit (8) comprises the following modules:

   - a module (81) for generating matrix M, which matrix contains m number of artificially generated tone signals $x_{Mk}[n]$,..., $x_{Mm}[n]$, where where n is an integer between 1 and N, N is the number of samples recorded during the data acquisition process, k is an integer between 1 and m
   - a module (82) for filtering the sampled signals around the frequency of the tone $f_T$ generated by the sound generating hardware unit (511) of the mobile phone (5),
   - a module (83) for generating analytic version of the filtered acoustic signal samples $X_F[n]$,
   - a module (84) for calculating the absolute value of the analytic version of the filtered acoustic signal samples $x_F[n]$,
   - a module (85) for generating a vector of correlation coefficient values c(k) between the absolute analytic acoustic signal $x_A[n]$ and the artificially generated tone signals contained in matrix M,
   - a module for selecting the maximal value (86) from the vector of correlation coefficient values c(k), and
   - a module for extracting the exact shaft rotational speed $f_{ER}$ being the frequency of such a tone signal from matrix M that corresponds to the highest correlation coefficient value from vector c(k).

9. A mobile device according to claims 6-8, **characterized in that** the mobile device may be a mobile phone (5), a tablet, a laptop, a PDA or any other mobile device which is equipped with an audio unit (51) which comprises a sound generating hardware unit (511) and a sound recording hardware unit (512).

10. A mobile device according to any previous claims, **characterized in that** it is connected with an external control unit (11) to which a vibration sensors are connected through an external processing unit (15) and an external data acquisition unit (14).

11. A computer program for automatic determination of rotational speed of a shaft in a rotating machine, which computer program is loadable and executable on a data processing unit (8) of a mobile device (5) and which computer program performs when being executed by the data processing unit of the mobile device, the method according to claims 1-5.

DAQ

PROCESSING
UNIT — 15

14

5

13

D

CONTROL
UNIT — 11

DRIVING
ELEMENT

GEARBOX

LOADING
ELEMENT

ALARM — 12

1

3

2

4

Fig. 1

9

10

5

8

81

85

82

86

7

83

87

84

6

51

511

512

Fig. 2

- $f_R$
- $f_S$
- $f_T$
- T
- D
- m

STEP 1:
DATA
ACQUISITION
PROCESS

x

STEP 2:
MEASUREMENT

$x[n]$

STEP 3:
DATA
PROCESSING

$c[n]$

STEP 4:
DETERMINATION OF
SHAFT ROTATIONAL
SPEED $f_{ER}$

$f_{ER}$

OPTIONAL
STEP 5:
TRIGGERING
AN ALARM

Fig. 3

Amplitude

x[n]

Time

**Fig. 4**

Amplitude

$x_F[n]$

Time

**Fig. 5**

Amplitude

$x_A[n]$

Time

**Fig. 6**

$c(k)$

$r(\ x_A[n],\ x_{Mk}[n]\ )$

$f_{ER}$

$f_{Mk}$

**Fig. 7**

13

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 34 04 032 A1 (BOSCH GMBH ROBERT [DE]) 8 August 1985 (1985-08-08) * page 3, line 14 - page 3, line 25 * * page 5, line 32 - page 6, line 17 * * page 8, line 1 - page 8, line 18; figures 1,3 * | 1-11 | INV. G01P3/44 G01P3/48 G01S15/58 |
| Y | DE 10 2007 020883 A1 (KNORR BREMSE SYSTEME [DE]) 20 November 2008 (2008-11-20) * paragraphs [0004], [0008], [0009], [0026], [0027], [0028] * | 1-11 | |
| Y | US 4 031 462 A (BOUVIER DAVID WILLIAM ET AL) 21 June 1977 (1977-06-21) * column 1, line 64 - column 2, line 34 * * column 3, line 1 - column 4, line 30 * * column 6, line 23 - column 6, line 37 * | 1-11 | |
| Y | EP 0 425 095 A1 (UNIV MANCHESTER [GB]) 2 May 1991 (1991-05-02) * page 3, line 33 - page 5, line 21 * | 1,2,6,8 | |
| Y | ANDREAS BRUNS: "Fourier-, Hilbert- and wavelet-based signal analysis: are they really different approaches?", JOURNAL OF NEUROSCIENCE METHODS, vol. 137, no. 2, 1 August 2004 (2004-08-01), pages 321-332, XP055182243, ISSN: 0165-0270, DOI: 10.1016/j.jneumeth.2004.03.002 * pages 321,325 * | 2,8 | TECHNICAL FIELDS SEARCHED (IPC) G01P G01S |
| Y | DE 10 2009 045410 A1 (BOSCH GMBH ROBERT [DE]) 14 April 2011 (2011-04-14) * abstract * | 1,6 | |

-/--

The present search report has been drawn up for all claims

| Place of search | Date of completion of the search | Examiner |
|---|---|---|
| Munich | 14 April 2015 | Felicetti, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 14 46 0078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | US 2003/036878 A1 (SAARINEN KARI [FI] ET AL) 20 February 2003 (2003-02-20) * paragraphs [0008], [0012], [0013], [0026] - [0048]; figure 2 * ----- | 1,6 | |
| | | | **TECHNICAL FIELDS SEARCHED (IPC)** |

The present search report has been drawn up for all claims

| Place of search | Date of completion of the search | Examiner |
|---|---|---|
| Munich | 14 April 2015 | Felicetti, Christoph |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 .........................................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 14 46 0078

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2015

| Patent document cited in search report | | Publication date | Patent family member(s) | | Publication date |
|---|---|---|---|---|---|
| DE 3404032 | A1 | 08-08-1985 | NONE | | |
| DE 102007020883 | A1 | 20-11-2008 | DE 102007020883 A1 | | 20-11-2008 |
| | | | WO 2008135182 A2 | | 13-11-2008 |
| US 4031462 | A | 21-06-1977 | NONE | | |
| EP 0425095 | A1 | 02-05-1991 | AU 6505790 A | | 18-04-1991 |
| | | | EP 0425095 A1 | | 02-05-1991 |
| | | | IE 903428 A1 | | 10-04-1991 |
| | | | PT 95387 A | | 29-05-1992 |
| | | | WO 9104496 A1 | | 04-04-1991 |
| DE 102009045410 | A1 | 14-04-2011 | CN 102053166 A | | 11-05-2011 |
| | | | DE 102009045410 A1 | | 14-04-2011 |
| US 2003036878 | A1 | 20-02-2003 | AT 303599 T | | 15-09-2005 |
| | | | AU 4838801 A | | 03-10-2001 |
| | | | AU 2001248388 B2 | | 04-08-2005 |
| | | | BR 0109411 A | | 03-06-2003 |
| | | | CA 2402441 A1 | | 27-09-2001 |
| | | | DE 60113101 D1 | | 06-10-2005 |
| | | | DE 60113101 T2 | | 09-03-2006 |
| | | | EP 1285274 A1 | | 26-02-2003 |
| | | | NO 20024471 A | | 18-09-2002 |
| | | | US 2003036878 A1 | | 20-02-2003 |
| | | | WO 0171362 A1 | | 27-09-2001 |
| | | | ZA 200207058 A | | 31-10-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1285274 A

- PL 211282